# EUROPÄISCHE PATENTSCHRIFT

(11) **EP 2 650 168 B1**
(45) Veröffentlichungstag und Bekanntmachung des Hinweises auf die Patenterteilung: **11.01.2017**
(21) Anmeldenummer: 13162245.8
(22) Anmeldetag: 04.04.2013
(51) Int. Cl.: B60N 2/42

(54) **Gehäuse, insbesondere gegen Detonationswirkung geschütztes Fahrzeuggehäuse**
Housing, in particular vehicle housing protected against the effects of detonation
Boîtier, notamment boîtier de véhicule protégé contre l'effet détonant

(30) Priorität: 10.04.2012 DE 102012103036
(43) Veröffentlichungstag der Anmeldung: 16.10.2013
(73) Patentinhaber: Krauss-Maffei Wegmann GmbH & Co. KG, 80997 München (DE)
(72) Erfinder: Bayer, Robert, 80997 München (DE); Schwippl, Christian, 80997 München (DE)
(74) Vertreter: Feder Walter Ebert

(56) Entgegenhaltungen:
- EP-A1- 2 238 874
- EP-A2- 1 577 153
- DE-A1- 10 130 632
- DE-B4- 4 341 952
- DE-C1- 10 033 340
- GB-A- 2 481 202
- US-A- 2 916 081
- US-A- 3 501 200
- US-A1- 2011 260 482

## Beschreibung

Die Erfindung betrifft ein Gehäuse, insbesondere ein gegen Detonationswirkung geschütztes Fahrzeuggehäuse, mit einem im Inneren des Gehäuses über ein Befestigungselement an einer Gehäusewand hängend angeordneten Ausrüstungsgegenstand, so dass dieser von dem Boden entkoppelt angeordnet ist.

Insbesondere militärische Fahrzeuge sehen sich auch im Rahmen aktueller Friedensmissionen häufig der Detonationswirkung verschiedenerer Sprengkörper ausgesetzt, beispielsweise von unten her wirkender Minen oder von der Seite her auf das Fahrzeug wirkender Sprengfallen usw.

In Folge einer Detonation wirken zum Teil ganz erhebliche Kräfte auf das Fahrzeug und insbesondere auch auf dessen Fahrzeuggehäuse, in welchem die Fahrzeugbesatzung und missionsspezifisch verschiedene Ausrüstungsgegenstände angeordnet sind. Die in Folge einer Detonationswirkung auftretenden Belastungen des Gehäuses lassen sich in zwei unterschiedliche Typen aufteilen. Zum Einen ergibt sich durch die bei der Detonation entstehenden Gasdrücke ein oftmals auch als Blast bezeichneter Druck, der ggf. gemeinsam mit einem auf dem Gehäuse auftreffenden Sprengprojektil innerhalb des Gehäuses eine Schockwelle erzeugt, welche mit großer Geschwindigkeit über das gesamte Gehäuse läuft. Zum Anderen ergibt sich parallel dazu häufig auch eine Globadbewegung des Gehäuses, durch welche das Gehäuse von der Detonationsquelle weg bewegt wird.

Diese bei einer Detonationswirkung auf das Gehäuse einwirkenden Belastungen setzen sich auch auf die im Inneren des Gehäuses angeordneten Ausrüstungsgegenstände wie etwa Fahrzeugsitze, Verstaubehältnisse usw. fort. Einen kritischen Punkt bilden dabei meist die Befestigungselemente, über welche die Ausrüstungsgegenstände mit der Gehäusewand verbunden sind, da diese den auftretenden Belastungen oftmals nicht standhalten können. In der Folge reißen sich die Ausrüstungsgegenstände von ihren Befestigungsstellen los können innerhalb des Gehäuses unkontrolliert umherfliegen, was mit einer erhöhten Gefahr für die Fahrzeugbesatzung einhergeht.

Selbst für den Fall, dass die Befestigungselemente den Belastungen standhalten, können sich vor allem bei als Fahrzeugsitzen ausgebildeten Ausrüstungsgegenständen kritische Situationen ergeben, da die infolge einer Detonationseinwirkung auftretenden Belastungen über das Gehäuse und die Befestigungselemente in die Fahrzeugsitze und damit letztlich auch in die Fahrzeuginsassen eingeleitet werden, was ebenfalls mit größeren Gefahren verbunden ist. Aus der GB 2 481 202 A ist ein Fahrzeugsitz bekannt, der über Dämpfungselement sowohl mit der Fahrzeugwand als auch mit dem Fahrzeugboden gekoppelt ist.

Die EP 1 577 153 A2 zeigt eine gedämpft ausgebildete Plattform auf deren Oberseite ein Sitz montiert werden kann.

Die US 2,916,081 zeigt einen Flugzeugsitz mit einem unter der Sitzfläche angeordneten Dämpfungselement.

Aus der DE 197 02 398 C1 ist ein als geschütztes Fahrzeuggehäuse ausgebildetes Gehäuse mit den Merkmalen des Oberbegriffs des Anspruchs 1 bekannt, bei welchem die auf die Fahrzeuginsassen einwirkenden Belastungen über eine vergleichsweise aufwändig gestaltete Vorrichtung reduziert werden sollen. Hierzu ist ein Fahrzeugsitz rückseitig über Befestigungselemente an einer Gehäusewand befestigt und gegenüber dem Fahrzeugboden über eine luftgefüllte Abfederungseinrichtung gesichert.

Diese Art der Befestigung eines Ausrüstungsgegenstands hat sich für von unterhalb des Fahrzeugs detonierende Minen zwar durchaus bewährt, eignet sich jedoch nicht für seitliche Ansprengungen.

**Aufgabe** der Erfindung ist es, ein gegen Detonationswirkung geschütztes Gehäuse anzugeben, in welchem Ausrüstungsgegenstände gegen übermäßige Belastungen infolge einer Detonationseinwirkung sowohl von unten als auch einer seitlichen Detonationswirkung auf konstruktiv einfache Weise gesichert sind.

Diese Aufgabe wird bei einem Gehäuse der eingangs genannten Art dadurch **gelöst,** dass das Befestigungselement als mehrachsdämpfender Umformkörper ausgebildet und sowohl für von unten entlang einer im Wesentlichen vertikalen Achse wirkende Detonationen als auch von der Seite her entlang einer im Wesentlichen horizontalen Achse wirkende Detonationen geeignet ist.

Durch die Ausbildung des Befestigungselements als mehrachsdämpfender Umformkörper ist der Ausrüstungsgegenstand auf konstruktiv einfache Weise in mehreren Richtungen gegen Detonationseinwirkung geschützt. Die infolge einer Detonation auftretenden Belastungen werden durch Umformung des Befes-tigungselements in der entsprechenden Wirkaschse der Detonation absorbiert und in gedämpfter Weise an den Ausrüstungsgegenstand weitergegeben, wodurch die auf diesen wirkenden Bekastungen stark abgeschwächt werden. Die als mehrachsdämpfende Umformkörper ausgebildeten Befestigungselemente eignen sich sowohl für von unter entlang einer im Wesentlichen vertikalen Achse wirkende Detonationen als auch von der Seite her entlang einer im Wesentlichen horizontalen Achse wirkende Detonationen.

Von Vorteil ist eine Ausgestaltung, nach welcher das Befestigungselement sich zwischen der Gehäusewand und dem Ausrüstungsgegenstand erstreckende plastische Umformzonen aufweist. Innerhalb der plastischen Umformzonen des Befestigungselements können die Belastungen definiert absorbiert und dann gedämpft in den Ausrüstungsgegenstand eingeleitet werden. Duch die plastische Verformung der Umformzonen absorbieren die Befestigungselemente einen Großteil der dabei auftretenden Energie. Es werden nicht alle Kräfte ungefiltert, sondern stark gedämpft an den Ausrüstungsgegenstand weitergeleitet. Die Umformzonen können aus einem vergleichsweise duktilen metallischen Material bestehen.

Eine weitere Ausgestaltung der Erfindung sieht vor, dass die plastischen Umformzonen über Anbindungsbereiche mit der Gehäusewand und/oder dem Ausrüstungsgegenstand verbunden sind. Die Anbindungsbereiche bilden die eigentlichen Befestigungsstellen. Die Anbindungsbereiche können derart ausgebildet sein, dass diese die plastischen Umformzonen zuverlässig im Bereich zwischen der sich infolge einer Detonation bewegenden Gehäusewand und dem im Inneren des Gehäuses angeordneten Ausrüstungsgegenstand halten, ohne dass die Umformzonen von der Anbindungsbereichen abreißen. Vorzugsweise sind die Anbindungsbereiche und die Umformzonen einstückig miteinander verbunden.

Die Anbindungsbereiche können in weiterer Ausgestaltung der Erfindung vorzugsweise in etwa quer zur Richtung der Umformzonen verlaufen, weshalb diese nach Art von Flanschen an der Gehäusewand bzw. dem Ausrüstungsgegenstand festgelegt werden können. Vorzugsweise erfolgt die Festlegung der Anbindungsbereiche lösbar, insbesondere über eine Schraubverbindung, so dass sich missionsspezifische Umbauten auf einfache Weise vornehmen lassen.

Eine weitere Ausgestaltung der Erfindung sieht vor, dass mindestens ein Anbindungsbereich über einen sockelartigen Distanzhalter mit der Gehäusewand verbunden ist. Über den sockelartigen Distanzhalter, welcher mit der Gehäusewand beispielsweise durch Verschweißen befestigt sein kann, ergibt sich ein erhöhter Abstand des wandseitigen Anbindungsbereichs und damit auch der Umformzonen gegenüber der Gehäusewand. Aufgrund des Abstands zwischen dem Anbindungsbereich und der Wand des Gehäuses wird sichergestellt, dass sich die plastischen Umformzonen im Falle einer Detonationseinwirkung ungestört im Bereich vor der Gehäusewand verformen können. Es wird vermieden, dass die Umformzonen infolge einer Detonationseinwirkung mit der Gehäusewand kollidieren, was eine unkontrollierte Krafteinleitung in den Ausrüstungsgegenstand mit sich brächte.

Eine weitere vorteilhafte Ausgestaltung sieht vor, dass der Distanzhalter mit dem Anbindungsbereich lösbar verbunden ist. Die lösbare Verbindung des Anbindungsbereichs mit dem Distanzhalter kann insbesondere durch Verschrauben erfolgen. Der Distanzhalter wiederum kann mit dem Gehäuse durch Schweißen verbunden sein. Vorteil der lösbaren Verbindung zwischen Distanzhalter und Anbindungsbereich ist, dass an dem Distanzhalter missionsspezifisch verschiedene Ausrüstungsgegenstände, wie beispielsweise Sitze, Verstaukisten oder ähnliche Gegenstände angebunden werden können.

Im Hinblick auf eine zuverlässige Energieabsorption des Befestigungselements wird vorgeschlagen, dass dieses als Hohlprofil ausgebildet ist. Der Hohlprofilquerschnitt wird infolge einer Minendetonation verformt und dadurch die anliegende Belastung in Verformungsenergie umgewandelt.

In diesem Zusammenhang ist es ferner von Vorteil, wenn das Befestigungselement als Vierkantprofil ausgebildet ist. Zwei Seiten des Vierkantprofils können die plastischen Umformzonen bilden, die beiden übrigen Kanten können als Anbindungsbereiche dienen. Es ergibt sich eine konstruktiv einfache Ausgestaltung des Befestigungselements. Das Vierkantprofil kann durch Abkanten eines Blechteils oder durch Ablängen eines Vierkantrohres hergestellt sein. Für eine günstige Krafteinleitung in die plastischen Umformzonen kann es von Vorteil sein, wenn das Vierkantprofil abgerundete Kanten aufweist, wodurch sich die auftretenden Kräfte zuverlässig übertragen und Abrisse vermeiden lassen.

Vorteilhafterweise ist gemäß einer weiteren Ausgestaltung vorgesehen, dass zwei gegenüberliegende Wände des Vierkantprofils als plastische Umformzonen und die beiden übrigen Wände als Anbindungsbereiche ausgebildet sind. Es ergibt sich eine Art Parallelogrammanordnung, bei welcher sich die energieabsorbierenden plastischen Umformzonen und die beiden Anbindungsbereiche einander jeweils gegenüberliegen. Einer der Anbindungsbereiche kann geschlitzt, der andere durchgehend ausgeführt sein, was sich insbesondere bei durch Abkanten hergestellten Vierkantprofilen anbietet.

Um ein progressives Dämpfungsverhalten zu erreichen, d. h. eine Dämpfung, bei welcher die Energieabsorption in den plastischen Umformzonen zu Beginn vergleichsweise gering ist und über die Detonationszeit gesehen progressiv ansteigt, wird vorgeschlagen, dass die plastischen Umformzonen einen über deren Länge ungleichmäßigen Materialquerschnitt aufweisen. Infolge einer Detonationseinwirkung beginnen sich anfangs die Stellen der Umformzonen mit dem geringsten Materialquerschnitt zu verformen. Entsprechend der sich ändernden Geometrie des Materialquerschnitts beginnen dann nach und nach auch die anderen Bereiche der plastischen Umformzonen sich zu verformen, wodurch entsprechend der ausgewählten Geometrie ein immer stärkerer Widerstand und damit eine stärkere Dämpfung aufgebaut werden.

Eine weitere vorteilhafte Ausgestaltung sieht vor, dass sich gegenüberliegende plastische Umformzonen gleich ausgebildet sind. Es ergibt sich eine symmetrische Einleitung der Kräfte.

Vorteilhaft sind die plastischen Umformzonen mit Ausnehmungen versehen. Durch die Anordnung und Geometrie der Ausnehmungen kann der Materialquerschnitt der Umformzonen beeinflusst werden. Denkbar sind beispielsweise mehrere Bohrungen, die nach Art eines Rasters über die Länge der Umformzonen verteilt sind. Alternativ können Schlitze und ggf. Nuten, ovale Ausnehmungen usw. Anwendung finden.

Ebenfalls zur Erreichung einer progressiven Dämpfung des Befestigungselements wird vorgeschlagen, dass das Innere des Befestigungselements mit einem Füllstoff gefüllt ist. Der Füllstoff kann ein elastisch oder plastisch verformbarer Werkstoff sein, bevorzugt aus einem Gummimaterial, Elastomermaterial, Kunststoffmaterial oder Schäumen, wie etwa Aluminiumschaum. Der Füllstoff kann den gesamten Querschnitt des Befestigungselements ausfüllen und nach der Montage des Befestigungselements in dieses eingeschoben, mit diesem verklebt oder in sonstiger Weise an diesem befestigt werden.

Eine weitere Ausgestaltung sieht vor, dass der Ausrüstungsgegenstand über mehrere Befestigungselemente, insbesondere mindestens vier, mit der Gehäusewand verbunden ist. Es ergibt sich eine Aufteilung der Energieabsorption auf mehrere Stellen, so dass nicht ein einziges Befestigungselement sämtliche Energie absorbieren muss.

Eine weitere Ausgestaltung der Erfindung sieht vor, dass vertikal beabstandet mindestens zwei Befestigungselemente angeordnet sind. Durch die vertikal übereinander liegende Anordnung der Befestigungselemente ergibt sich eine Art Parallelschaltung der beiden Befestigungselemente, welche beide infolge einer in vertikalen Wirkachse wirkenden Detonation, beispielsweise infolge einer Landmine, verformt werden und gemeinsam für eine Dämpfung der auf den Aufrüstungsgegenstand einwirkenden Kräfte dienen. Vorzugsweise sind die Befestigungselemente in einem Randbereich des Ausrüstungsgegenstands angeordnet.

Eine weitere Ausgestaltung der Erfindung sieht vor, dass horizontal beabstandet mindestens zwei Befestigungselemente angeordnet sind. Durch die horizontal nebeneinander liegende Anordnung der Befestigungselemente ergibt sich eine Art Parallelschaltung der beiden Befestigungselemente, welche beide infolge einer in horizontalen Wirkachse wirkenden Detonation, beispielsweise infolge einer Sprengfalle, verformt werden und gemeinsam für eine Dämpfung der auf den Aufrüstungsgegenstand einwirkenden Kräfte dienen. Vorzugsweise sind die Befestigungselemente in einem Randbereich des Ausrüstungsgegenstands angeordnet.

Besonders bevorzugt ist der Ausrüstungsgegenstand über mindestens eine Befestigungsprofilschiene mit mindestens zwei Befestigungselementen verbunden. Über die Befestigungsprofilschienen lässt sich seitlich der Abstand der Befestigungselemente gegenüber dem Ausrüstungsgegenstand vergrößern. Auch lassen sich Ausrüstungsgegenstände mit unterschiedlichen Abmessungen an den Profilschienen anordnen.

Schließlich wird vorgeschlagen, dass die Verbindungsstellen zwischen der Profilschiene und dem Befestigungselement seitlich neben dem Ausrüstungsgegenstand angeordnet sind. Es ergibt sich eine Anordnung, bei welcher die eigentlichen Montagestellen seitlich neben dem Ausrüstungsgegenstand liegen, was eine günstige Krafteinleitung zur Folge haben kann.

Weitere Einzelheiten und Vorteile eines erfindungsgemäßen Gehäuses werden nachfolgend unter Zuhilfenahme der beigefügten Zeichnungen von Ausführungsbeispielen erläutert. Darin zeigen:
- Fig. 1: eine schematische Schnittansicht durch das Fahrzeuggehäuse eines militärischen Fahrzeugs in einer Richtung quer zur Fahrtrichtung,
- Fig. 2: eine vergrößerte Ansicht auf ein Befestigungselement gemäß der in Fig. 1 mit II bezeichneten Einzelheit,
- Fig. 3: in perspektivischer Ansicht ein über mehrere Befestigungselemente an einer Wand des Gehäuses befestigter Ausrüstungsgegenstand,
- Fig. 4 a) - g): perspektivische Ansichten verschiedener Ausführungsformen von Befestigungselementen,
- Fig. 5: in seitlicher Schnittansicht eine weitere Ausführung eines Befestigungselements,
- Fig. 6: eine der Ausführung in Fig. 3 ähnliche Ausführung der Erfindung und
- Fig. 7: eine vergrößerte Ansicht auf ein Befestigungselement gemäß der in Fig. 1 mit VII bezeichneten Einzelheit.

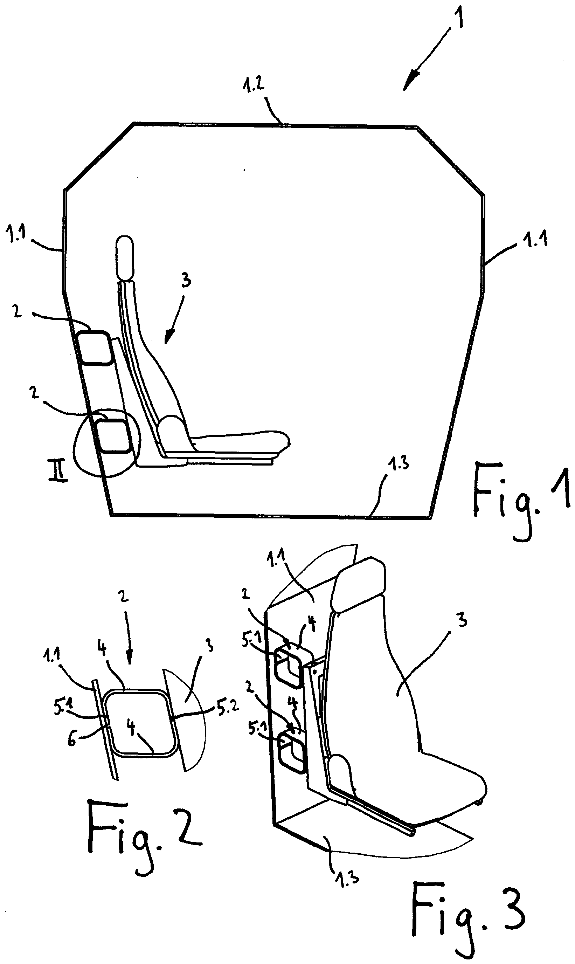

Fig. 1 zeigt in schematischer Ansicht ein Gehäuse 1 mit einem darin angeordneten Ausrüstungsgegenstand 3, der über mehrere Befestigungselemente 2 mit dem Gehäuse 1 verbunden ist.

Bei dem Gehäuse 1 handelt es sich um ein gegen Detonationseinwirkung geschütztes Fahrzeuggehäuse eines militärischen Fahrzeugs mit einem Boden 1.3, Wänden 1.1 sowie einem Dach 1.2. Bei dem Ausrüstungsgegenstand 3 handelt es sich um einen Personensitz für einen Fahrzeuginsassen, der an einer seitlichen Wand 1.1 des Gehäuses 1 hängend angeordnet ist, so dass dieser von dem Boden 1.3 entkoppelt angeordnet ist. Die Erfindung ist jedoch nicht auf solche Ausrüstungsgegenstände 3 beschränkt, sondern kann gleichermaßen auch für andere Ausrüstungsgegenstände 3, wie etwa Verstaubehältnisse, Gewehrhalter usw. verwendet werden. Auch ist es nicht erforderlich, dass die Ausrüstungsgegenstände 3 an einer seitlichen Wand 1.1 hängen. Ebenso ist es möglich, die Ausrüstungsgegenstände 3 in erfindungsgemäßer Weise auch an anderen Wänden 1.1 anzuordnen, beispielsweise an Rückwänden, Zwischenwänden usw.

In Folge einer Detonationseinwirkung wirken zum Teil ganz erhebliche Belastungen auf das Gehäuse 1, die in Form einer Schockwelle durch das Gehäuse 1 laufen und gleichzeitig zu einer Globalbewegung des Gehäuses 1 führen. Die durch die Globalbewegung wie auch die Schockwelle auf das Gehäuse 1 einwirkenden Kräfte erzeugen eine große Beschleunigung des Gehäuses 1, welche auch auf die innerhalb des Gehäuses 1 angeordneten Ausrüstungsgegenstände 3 wirkt.

Um diese Belastungen abzudämpfen, sind erfindungsgemäß Befestigungselemente 2 vorgesehen, welche als mehrachsdämpfende Umformkörper ausgebildet sind, worauf nachfolgend zunächst anhand der Darstellungen in den Fig. 2 und 3 eingegangen werden wird.

Die Befestigungselemente 2 sind als hohle Vierkantprofile mit abgerundeten Kanten ausgebildet und dienen zur Absorption von Energie durch Umformung. Die Befestigungselemente 2 weisen hierzu jeweils zwei Umformzonen 4 auf, welche sich in der in den Fig. 2 und 3 dargestellten Ausgangsstellung im Wesentlichen in einer horizontalen Ebene erstrecken. Demgegenüber abgewinkelt verlaufen Anbindungsbereiche 5.1, 5.2, welche zur Anbindung des Ausrüstungsgegenstands 3 über die Umformzonen 4 an die Gehäusewand 1.1 dienen.

Im Falle einer Detonationseinwirkung von unten, beispielsweise infolge einer überfahrenen Landmine, wird der sich ergebende Schock von unten in das Gehäuse 1 eingeleitet und das Gehäuse 1 bewegt sich global nach oben. Der Ausrüstungsgegenstand 3, beim Ausführungsbeispiel ein Fahrzeugsitz zur Aufnahme eines Fahrzeuginsassen, würde sich bei steifer Anbindung an die Wand 1.1 entsprechend der globalen Bewegung des Gehäuses 1 mit diesem gemeinsam nach oben bewegen und auch der Schock würde ungefiltert in den Ausrüstungsgegenstand 3 eingeleitet werden. Um diese Kräfte abzumildern, ist das Befestigungselement 2 erfindungsgemäß als mehrachsdämpfender Umformkörper ausgebildet, durch dessen plastische Umformung nennenswerte Anteile der Detonationsenergie in plastische Verformung umgewandelt werden. Im Falle einer Ansprengung von unten verformt sich das Befestigungselement 2 insgesamt nach Art einer Parallelogrammverformung, wobei die Anbindungsbereiche 5.1, 5.2 an der Gehäusewand 1.1 bzw. dem Ausrüstungsgegenstand 3 verbleiben und sich die Umformzonen 4 unter Aufnahme von Energie plastisch verformen. Dabei schwenken die Umformzonen 4 gegenüber der in den Figuren dargestellten Ausgansstellung nach unten und ziehen sich ggf. in die Länge.

Die Ansprengungen in vertikaler Richtung stellen die erste Wirkachse dar, innerhalb welcher das Befestigungselement 2 eine Dämpfungswirkung zu entfalten vermag.

Eine zweie Wirkachse ergibt sich für seitliche Ansprengungen bzw. Detonationen. Im Falle einer seitlichen Detonation wird ebenfalls eine Schockwelle in das Gehäuse 1 eingeleitet, wobei jedoch die Globalbewegung des Gehäuses 1 nicht in vertikaler Richtung, sondern in seitlicher Richtung erfolgt. Dabei wirken die Befestigungselemente 2 und genauer gesagt deren Umformzonen 4 als eine Art Knautschzone, welche sich unter dem Einfluss der Detonationskräfte ziehharmonikaartig verformt. Dabei werden die Umformzonen derart verformt, dass die Anbindungsbereiche 5.1, 5.2 aufeinander zu bewegt werden.

Auch sind Überlagerungen dieser beiden Verformungsarten des Befestigungselements 2, insbesondere im Falle von schräg unten erfolgender Detonationseinwirkung, möglich.

Beim Ausführungsbeispiel sind insgesamt vier in Eckbereichen des Ausrüstungsgegenstands 3 angeordnete Befestigungselemente 2 vorgesehen. Es liegen jeweils zwei Befestigungselemente 2 in vertikaler Richtung übereinander und in horizontaler Richtung nebeneinander. Die Absorption der Belastungen infolge einer von unten her wirkenden Detonation wie auch die Absorption der Belastungen infolge einer von der Seite her wirkenden Detonation werden daher nach Art einer Parallelschaltung auf die in der jeweiligen Wirkrichtung hintereinander angeordneten Befestigungselemente 2 aufteilt.

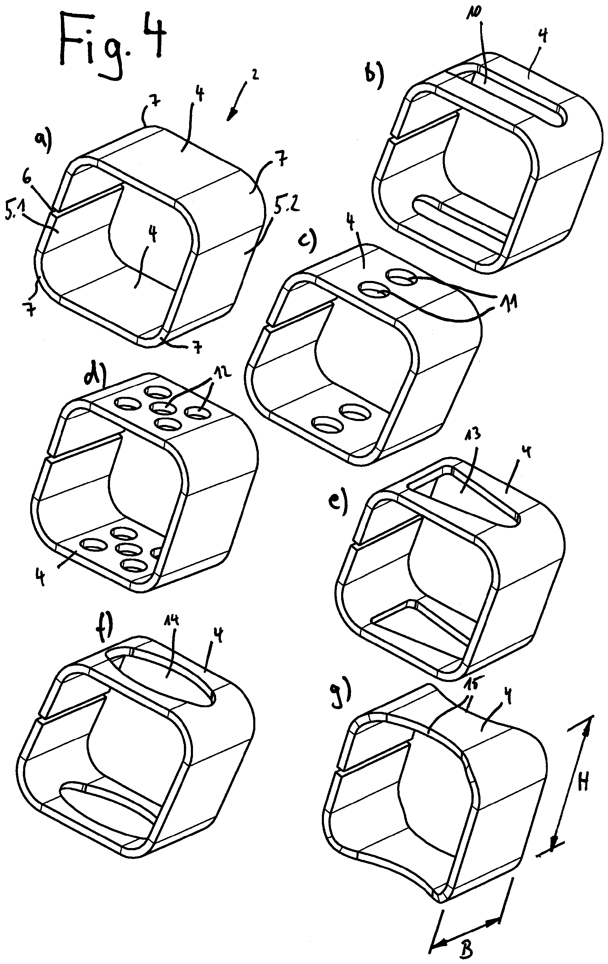

Einzelheiten und verschiedene Gestaltungen der Befestigungselemente 2 sollen nachfolgend zunächst anhand der Darstellungen in Fig. 4 erläutert werden.

Wie die Darstellungen in Fig. 4 erkennen lassen, ist das Befestigungselement 2 von insgesamt vierkantprofilförmiger Geometrie. Die Abmessungen des Befestigungselements 2 sind derart gewählt, dass sich ein Verhältnis zwischen der Höhe H und der Breite B des Befestigungselements 2 von etwa 2:1 ergibt, vgl. insbesondere Fig. 4 g). Auch sind andere Verhältnisse im Bereich von etwa 1:1 bis 3:1 denkbar.

Das Befestigungselement 2 ist gemäß den Darstellungen in Fig. 4 aus einem abgekanteten Blechstück hergestellt, weshalb sich auf der einen Seite des Befestigungselements 2 im Bereich eines Anbindungsbereichs 5.1 ein Schlitz 6 ergibt. Dieser kann durch Verschweißen geschlossen werden, dies muss jedoch nicht so sein. An den in Fig. 4 oberen Seiten sowie den unteren Seiten des Vierkantprofils sind jeweils unterschiedliche Ausführungen der Umformzonen 4 dargestellt, welche ohne oder mit unterschiedlichen Ausnehmen 10, 11, 12, 13, 14, 15 versehen sind.

Durch die Ausnehmungen 10, 11, 12, 13, 14, 15 lässt sich ein ungleichmäßiger Materialquerschnitt über die Länge des Verformungsbereichs 4 erzielen, wodurch sich das Dämpfungsverhalten der Umformzonen 4 einstellen und insbesondere ein progressives Dämpfungsverhalten erreichen lässt.

Die Darstellung in Fig. 4 a) zeigt zunächst ein Befestigungselement 2 mit gleichmäßig ausgebildeten Umformzonen 4 ohne zusätzliche Ausnehmungen, welche an gegenüberliegenden Seiten des Vierkantprofils vorgesehen sind.

Bei der Ausführung gemäß Fig. 4 b) sind Ausnehmungen 10 in Form länglicher Schlitze vorgesehen, weshalb sich die Umformzonen 4 gegenüber der materialstärkeren Variante in Fig. 4 a) einfacher verformen lassen.

Die Fig. 4 c) und 4 d) zeigen Ausführungen mit einer unterschiedlich großen Anzahl runder Bohrungen 11, wobei bei der Ausführung in Fig. 4 c) lediglich zwei Bohrungen im Bereich einer Umformzone 4 vorgesehen sind und bei der Ausführung gemäß der Darstellung in Fig. 4 d) insgesamt fünf Ausnehmungen 12 rasterförmig über die Fläche der Umformzonen 4 verteilt angeordnet sind.

In Fig. 4 e) ist eine Ausnehmung 13 von etwa dreieckförmiger Geometrie vorgesehen, wodurch sich ein über sich die Länge der Umformzonen 4 stetig ändernder Materialquerschnitt ergibt.

In Fig. 4 f) ist eine Ausnehmung 14 von in etwa ovaler bzw. rautenförmiger Geometrie dargestellt.

Bei der Ausführung gemäß Fig. 4 g) liegen die Ausnehmungen 15 am Rand der Umformzone 4, wodurch sich eine sich in Richtung deren Mitte verjüngende Ausbildung der Umformzone 4 ergibt.

Neben den zuvor beschriebenen Ausnehmungen 10 bis 15 sind auch anders gestaltete Ausnehmungen denkbar. Insbesondere ist es möglich, die Ausnehmungen 10 bis 15 nicht durchgängig sondern nutartig auszubilden, wodurch zwar lokale Materialschwächungen erreicht werden, die Wände des Vierkantprofils jedoch geschlossen bleiben.

Durch die Ausnehmungen 10 bis 15 wird das Dämpfungsverhalten des Befestigungselements 2 eingestellt, wodurch sich progressive Dämpfungen, d. h. zum Ende des Dämpfungswegs hin einen größeren Widerstand gegen Verformung aufbauende und damit stärker dämpfende Eigenschaften der Befestigungselemente 2 erreichen lassen.

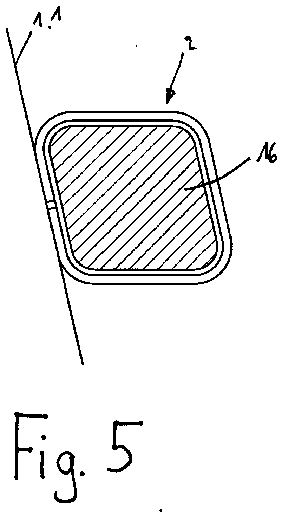

Fig. 5 zeigt eine weitere Möglichkeit, welche alternativ oder zusätzlich zum Vorsehen von Ausnehmen 10, 11, 12, 13, 14, 15 an den Befestigungselementen 2 vorgesehen werden kann, um eine progressive Dämpfung zu erreichen.

Bei der Ausgestaltung gemäß Fig. 5 ist im Inneren des als Hohlprofil ausgebildeten Befestigungselements 2 ein Füllstoff 16 vorgesehen. Bei dem Füllstoff 16 kann es sich um ein elastisch oder plastisch komprimierbares Material handeln, beispielsweise ein Gummimaterial, Kunststoffmaterial, einen Schaum - wie etwa Aluminiumschaum - oder ähnliche Materialen. Auch durch das Vorsehen eines Füllstoffs 16 im Inneren des Befestigungselements 2 kann eine progressive Dämpfung erreicht werden, da der Widerstand gegen Verformung mit dem Grad der Umformung ansteigt.

Wie vorstehend beschrieben wurde, ergeben sich eine ganze Reihe von Möglichkeiten, das Dämpfungsverhalten bzw. die Dämpfparameter der Befestigungselemente 2 einzustellen. Vorteilhafterweise werden innerhalb des Gehäuses 1 unterschiedliche Befestigungselemente 2 für unterschiedliche Ausrüstungsgegenstände 3 verwendet, die an die jeweiligen Ansprüche bzw. Belastungsempfindlichkeiten der Ausrüstungsgegenstände 3 angepasst sind. Beim Austausch von Ausrüstungsgegenständen 3 werden vorteilhafterweise stets auch die Befestigungselemente 2 mit ausgetauscht und gegen solche Befestigungselemente 2 ersetzt, deren Dämpfungsverhalten für die neu einzusetzenden Ausrüstungsgegenstände 3 ausgelegt ist. Ein solcher Austausch ist insbesondere bei durch Verschrauben an dem Gehäuse 1 montierten Befestigungselementen 2 mit wenig Aufwand möglich.

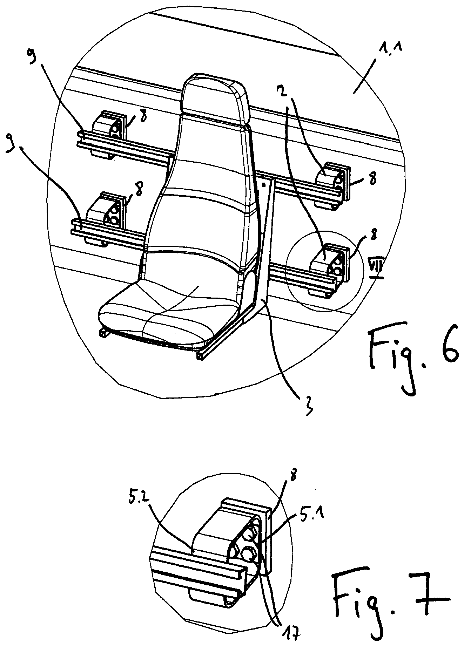

Die Darstellungen in den Fig. 6 und 7 zeigen schließlich eine Variante der Erfindung, bei welcher die Anbindungsbereiche 5.1, 5.2 nicht direkt mit der Gehäusewand 1.1 bzw. dem Ausrüstungsgegenstand 3 verbunden sind, sondern die Verbindung auf indirektem Weg erfolgt.

Die Verbindung des Anbindungsbereichs 5.1 an der Gehäusewand 1.1 erfolgt über einen Distanzhalter 8. Der Distanzhalter 8 ist nach Art einer Platte ausgebildet und bildet eine sockelartige Befestigungsfläche für den Anbindungsbereich 5.1. Es ergibt sich ein größerer Abstand der Umformzonen 4 gegenüber der Gehäusewand 1.1, wodurch die Gefahr einer Kollision zwischen den Umformzonen 4 und der Gehäusewand 1.1 bei einer Umformung des Befestigungselements 2 reduziert wird.

Der Distanzhalter 8 ist mit der Wand 1.1 des Gehäuses 1 beispielsweise durch Verschweißen befestigt. Die Befestigung der Anbindungsbereiche 5.1 erfolgt lösbar mittels Schraubbolzen 17, so dass sich die Befestigungselemente 2 auf einfache Weise von der Gehäusewand 1.1 bzw. dem Distanzhalter 8 lösen lassen.

Der dem Anbindungsbereich 5.1 gegenüberliegende Anbindungsbereich 5.2 ist mit dem Ausrüstungsgegenstand 3 über eine Profilschiene 9 verbunden. Die Profilschiene 9 hat den Vorteil, dass schmalere oder breitere Ausrüstungsgegenstände an den dafür vorgesehenen Befestigungsstellen der Gehäusewand 1.1 vorgesehen werden können. Bei der Ausführung gemäß Fig. 6 könnten beispielsweise auch zwei als Sitze ausgebildete Ausrüstungsgegenstände 3 gemeinsam über die Befestigungsprofilschienen 9 an der Gehäusewand 1.1 festgelegt werden. Auch könnte beispielsweise eine größere Staukiste oder ähnliche Ausrüstungsgegenstände 3 festgelegt werden. Bei der dargestellten Befestigung eines Sitzes ergeben sich Befestigungsstellen, die seitlich einen gewissen Abstand zu dem Ausrüstungsgegenstand 3 aufweisen.

Die Profilschienen 9 bilden eine Art Sammelschienen, über welche sich mehrere Ausrüstungsgegenstände 3 über die Länge der Gehäusewand verteilt befestigen lassen, sofern jede Profilschiene 9 über mindestens zwei Befestigungselemente 2 mit dem Gehäuse 1 verbunden ist.

Das vorstehend erläuterte Gehäuse zeichnet sich insbesondere dadurch aus, dass die auf die im Inneren des Gehäuses 1 an dessen Gehäusewand 1.1 angeordneten Ausrüstungsgegenstände 3 einwirkenden Kräfte deutlich reduziert werden und am Ende des Dämpfungswegs kein starrer Endanschlag vorgesehen ist, so dass selbst bei maximalem Dämpfungsweg keine ruckartigen Belastungen in die Ausrüstungsgegenstände 3 eingeleitet werden.

Es ergibt sich eine konstruktiv einfach ausgebildete Mehrachsdämpfung, bei der sowohl Detonationswirkungen von unten wie auch von der Seite her zuverlässig abgedämpft werden. Auch anders gerichtete Detonationseinwirkungen, beispielsweise von schräg unten, werden abgedämpft.

### Bezugszeichen:

- 1: Gehäuse
- 1.1: Gehäusewand
- 1.2: Dach
- 1.3: Boden
- 2: Befestigungselement
- 3: Ausrüstungsgegenstand
- 4: Umformzone
- 5.1: Anbindungsbereich
- 5.2: Anbindungsbereich
- 6: Schlitz
- 7: Rundung
- 8: Distanzhalter
- 9: Profilschiene
- 10: Ausnehmung
- 11: Ausnehmung
- 12: Ausnehmung
- 13: Ausnehmung
- 14: Ausnehmung
- 15: Ausnehmung
- 16: Füllstoff
- 17: Schraubbolzen

- B: Breite
- H: Höhe

## Patentansprüche

1. Gehäuse, insbesondere gegen Detonationswirkung geschütztes Fahrzeuggehäuse, mit einem im Inneren des Gehäuses (1) über ein Befestigungselement (2) an einer Gehäusewand (1.1) hängend angeordneten Ausrüstungsgegenstand (3), so dass dieser von dem Boden (1.3) entkoppelt angeordnet ist,
**dadurch gekennzeichnet,**
**dass** das Befestigungselement (2) als mehrachsdämpfender Umformkörper ausgebildet und sowohl für von unten entlang einer im Wesentlichen vertikalen Achse wirkende Detonationen als auch von der Seite her entlang einer im Wesentlichen horizontalen Achse wirkende Detonationen geeignet ist.

2. Gehäuse nach Anspruch 1, **dadurch gekennzeichnet, dass** das Befestigungselement (2) sich zwischen der Gehäusewand (1.1) und dem Ausrüstungsgegenstand (3) erstreckende plastische Umformzonen (4) aufweist.

3. Gehäuse einem der vorhergehenden Ansprüche, **dadurch gekennzeichnet, dass** die plastischen Umformzonen (4) über Anbindungsbereiche (5.1, 5.2) mit der Gehäusewand (1.1) und/oder dem Ausrüstungsgegenstand (3) verbunden sind.

4. Gehäuse nach Anspruch 3, **dadurch gekennzeichnet, dass** mindestens ein Anbindungsbereich (5.1) über einen sockelartigen Distanzhalter (8) mit der Gehäusewand (1.1) verbunden ist.

5. Gehäuse nach einem der vorhergehenden Ansprüche, **dadurch gekennzeichnet, dass** das Befestigungselement (2) als Hohlprofil ausgebildet ist.

6. Gehäuse nach Anspruch 5, **dadurch gekennzeichnet, dass** das Befestigungselement (2) als Vierkantprofil ausgebildet ist.

7. Gehäuse nach Anspruch 6, **dadurch gekennzeichnet, dass** zwei gegenüberliegende Wände des Vierkantprofils als plastische Umformzonen (4) und die beiden übrigen Wände als Anbindungsbereiche (5.1, 5.2) ausgebildet sind.

8. Gehäuse nach einem der Ansprüche 2 bis 7, **dadurch gekennzeichnet, dass** die plastischen Umformzonen (4) einen über deren Länge ungleichmäßigen Materialquerschnitt aufweisen.

9. Gehäuse nach einem der Ansprüche 2 bis 8, **dadurch gekennzeichnet**, das sich gegenüberliegende plastische Umformzonen (4) gleich ausgebildet sind.

10. Gehäuse nach einem der Ansprüche 2 bis 9, **dadurch gekennzeichnet, dass** die plastischen Umformzonen (4) mit Ausnehmungen versehen sind.

11. Gehäuse nach einem der Ansprüche 5 bis 10, **dadurch gekennzeichnet, dass** das Innere des Hohlprofils mit einem Füllstoff gefüllt ist.

12. Gehäuse nach einem der vorhergehenden Ansprüche, **dadurch gekennzeichnet, dass** der Ausrüstungsgegenstand (3) über mehrere Befestigungselemente (2), insbesondere vier, mit der Gehäusewand (1.1) verbunden ist.

13. Gehäuse nach einem der vorhergehenden Ansprüche, **dadurch gekennzeichnet, dass** vertikal beabstandet und/oder horizontal beabstandet mindestens zwei Befestigungselemente (2) angeordnet sind.

14. Gehäuse nach einem der vorhergehenden Ansprüche, **dadurch gekennzeichnet, dass** der Ausrüstungsgegenstand (3) über mindestens eine Profilschiene (9) mit mindestens zwei Befestigungselementen (2) verbunden ist.

15. Gehäuse nach einem Anspruch 14, **dadurch gekennzeichnet, dass** die Verbindungsstellen zwischen der Profilschiene (9) und dem Befestigungselement (2) seitlich neben dem Ausrüstungsgegenstand (3) angeordnet sind.

## Claims

1. Housing, in particular vehicle housing which is protected against detona tion effects, having an equipment item (3) which is arranged in the interior of the housing (1) in a suspended manner via a fastening element (2) on a housing wall (1.1), with the result that the said equipment item (3) is arranged in a manner which is decoupled from the floor (1.3), **characterized in that** the fastening element (2) is configured as a deformable body which can damp in multiple axes, and is suitable both for detonations which act from below along a substantially vertical axis and for detonations which act from the side along a substantially horizontal axis.

2. Housing according to Claim 1, **characterized in that** the fastening element (2) has plastic deformation zones (4) which extend between the housing wall (1.1) and the equipment item (3).

3. Housing according to either of the preceding claims, **characterized in that** the plastic deformation zones (4) are connected via attaching regions (5.1, 5.2) to the housing wall (1.1) and/or the equipment item (3).

4. Housing according to Claim 3, **characterized in that** at least one attaching region (5.1) is connected to the housing wall (1.1) via a pedestal-like spacer element (8).

5. Housing according to one of the preceding claims, **characterized in that** the fastening element (2) is configured as a hollow profile.

6. Housing according to Claim 5, **characterized in that** the fastening element (2) is configured as a square profile.

7. Housing according to Claim 6, **characterized in that** two walls of the square profile which lie opposite one another are configured as plastic deformation zones (4), and the two remaining walls are configured as attaching regions (5.1, 5.2).

8. Housing according to one of Claims 2 to 7, **characterized in that** the plastic deformation zones (4) have a material cross section which is inhomogeneous over their length.

9. Housing according to one of Claims 2 to 8, **characterized in that** plastic deformation zones (4) which lie opposite one another are of identical configuration.

10. Housing according to one of Claims 2 to 9, **characterized in that** the plastic deformation zones (4) are provided with recesses.

11. Housing according to one of Claims 5 to 10, **characterized in that** the interior of the hollow profile is filled with a filler material.

12. Housing according to one of the preceding claims, **characterized in that** the equipment item (3) is connected to the housing wall (1.1) via a plurality of fastening elements (2), in particular four.

13. Housing according to one of the preceding claims, **characterized in that** at least two fastening elements (2) are arranged spaced apart vertically and/or spaced apart horizontally.

14. Housing according to one of the preceding claims, **characterized in that** the equipment item (3) is connected via at least one profile rail (9) to at least two fastening elements (2).

15. Housing according to Claim 14, **characterized in that** the connecting points between the profile rail (9) and the fastening element (2) are arranged laterally next to the equipment item (3).

## Revendications

1. Boîtier, en particulier boîtier de véhicule protégé de l'action d'une détonation avec une pièce d'équipement (3) agencée en étant accroché à une paroi de boîtier (1.1) à l'intérieur du boîtier (1) par un élément de fixation (2) de sorte que celui-ci soit agencé en étant découplé du sol (1.3), **caractérisé en ce que** l'élément de fixation (2) est réalisé sous forme de corps de formage amortisseur à plusieurs axes et est approprié non seule ment pour des détonations agissant de dessous le long d'un axe sensible ment vertical mais aussi des détonations agissant depuis le côté le long d'un axe sensiblement horizontal.

2. Boîtier selon la revendication 1, **caractérisé en ce que** l'élément de fixation (2) présente des zones de formage (4) plastiques s'étendant entre la paroi de boîtier (1.1) et la pièce d'équipement (3).

3. Boîtier selon l'une quelconque des revendications précédentes, **caractérisé en ce que** les zones de formage (4) plastiques sont reliées par des zones de liaison (5.1, 5.2) à la paroi de boîtier (1.1) et/ou à la pièce d'équipement (3).

4. Boîtier selon la revendication 3, **caractérisé en ce qu'**au moins une zone deliaison (5.1) est reliée par un élément d'écartement (8) de type socle à la paroi de boîtier (1.1).

5. Boîtier selon l'une quelconque des revendications précédentes, **caractérisé en ce que** l'élément de fixation (2) est réalisé sous forme de profilé creux.

6. Boîtier selon la revendication 5, **caractérisé en ce que** l'élément de fixation (2) est réalisé sous forme de profilé carré.

7. Boîtier selon la revendication 6, **caractérisé en ce que** deux parois en regard du profilé carré sont réalisées sous forme de zones de formage (4) plastiques et les deux parois restantes sont réalisées sous forme de zones de liaison (5.1, 5.2).

8. Boîtier selon l'une quelconque des revendications 2 à 7, **caractérisé en ce que** les zones de formage (4) plastiques présentent une section transversale de matériau irrégulière sur leur longueur.

9. Boîtier selon l'une quelconque des revendications 2 à 8, **caractérisé en ce que** des zones de formage (4) plastiques en regard sont réalisées de manière identique.

10. Boîtier selon l'une quelconque des revendications 2 à 9, **caractérisé en ce que** les zones de formage (4) plastiques sont pourvues d'évidements.

11. Boîtier selon l'une quelconque des revendications 5 à 10, **caractérisé en ce que** l'intérieur du profilé creux est rempli d'une substance de remplissage.

12. Boîtier selon l'une quelconque des revendications précédentes, **caractérisé en ce que** la pièce d'équipement (3) est reliée par plusieurs éléments de fixation (2), en particulier quatre, à la paroi de boîtier (1.1).

13. Boîtier selon l'une quelconque des revendications précédentes, **caractérisé en ce qu'**au moins deux éléments de fixation (2) sont agencés à distance verticale et/ou horizontale.

14. Boîtier selon l'une quelconque des revendications précédentes, **caractérisé en ce que** la pièce d'équipement (3) est reliée par au moins un rail profilé (9) à au moins deux éléments de fixation (2).

15. Boîtier selon la revendication 14, **caractérisé en ce que** les points de liaison entre le rail profilé (9) et l'élément de fixation (2) sont agencés latéralement à côté de la pièce d'équipement (3).
